# EUROPÄISCHE PATENTSCHRIFT

(11) **EP 0 344 645 B1**
(45) Veröffentlichungstag und Bekanntmachung des Hinweises auf die Patenterteilung: **16.03.1994**
(21) Anmeldenummer: 89109551.5
(22) Anmeldetag: 26.05.1989
(51) Int. Cl.: G01N 21/47, G01J 3/51

(54) **Remissionsmessgerät**
Device for measuring reflection
Appareil de mesure de réflexion

(30) Priorität: 03.06.1988 DE 3818815
(43) Veröffentlichungstag der Anmeldung: 06.12.1989
(73) Patentinhaber: Firma Carl Zeiss, D-73446 Oberkochen (DE); CARL ZEISS-STIFTUNG HANDELND ALS CARL ZEISS, D-89518 Heidenheim (Brenz) (DE)
(72) Erfinder: Gerlinger, Hermann, Dr., D-7080 Aalen (DE)

(56) Entgegenhaltungen:
- EP-A- 0 075 766
- DE-A- 3 421 577
- US-A- 2 358 020
- US-A- 4 651 262
- JOURNAL OF PHYSICS E: SCIENTIFIC INSTRUMENTS, Band 18, 1985, pages 914-919, Oxford, GB; H.H. SCHLEMMER et al.: "Diode array spectrometer: an optimised design"

## Beschreibung

Die vorliegende Erfindung betrifft ein Remissionsmeßgerät mit einer Meßöffnung, mit einer Lichtquelle zum Beleuchten der Probe und einem Empfänger, welcher die von der Probe durch die Meßöffnung remittierte Strahlung innerhalb einer vorgegebenen Apertur erfaßt.

Ein solches Remissionsmeßgerät ist aus DE-A-3 421 577 bekannt.

Remissionsmeßgeräte messen das Verhältnis der von einer Probe reflektierten Strahlung zu der von einer Vergleichsprobe unter gleichen Bedingungen reflektierten Strahlung. Bei vielen Geräten wird dazu die Probe an eine kreisförmige Meßöffnung angelegt, damit sie zum Meßgerät in eine genau definierte Lage kommt. Oft ist diese Meßöffnung in einer sog. Ulbrichtschen Kugel angeordnet, über welche die Probe diffus beleuchtet wird.

Bei manchen Remissionsmeßgeräten ist ein sog. Meßkopf mit allen für die Messung in unmittelbarer Probennähe notwendigen Teilen vom übrigen Gerät getrennt und mit ihm nur durch Kabel, die Lichtleiter enthalten, verbunden. Bei diesen Geräten kann die Meßöffnung an die Proben herangebracht werden, was inbesondere bei großen und schweren Proben ein Vorteil ist. Ein derartiges Remissionsmeßgerät ist z.B. in einer Veröffentlichung von H.H. Schlemmer u. M. Mächler (J. Phys. E: Sci-Instrum. 18, 913 (1985)) beschrieben.

Damit das Meßgerät oder der Meßkopf nicht zu groß wird, darf die Meßöffnung einen bestimmten Durchmesser nicht überschreiten. Da die Meßöffnung jedoch groß gegenüber der Oberflächenstruktur der Probe sein muß, um Meßergebnisse zu erhalten, die unabhängig davon sind, welcher Teil der Probe zufällig an die Meßöffnung angelegt ist, lassen sich bei einem gegebenen Durchmesser der Meßöffnung nur Proben mit einer genügend kleinen Oberflächenstruktur zuverlässig messen. Dies ist besonders dann ein Nachteil, wenn nur gelegentlich Proben mit großer Oberflächenstruktur gemessen werden sollen.

Eine Vergrößerung der Meßfläche auf der Probe läßt sich jedoch nicht dadurch erreichen, daß man die Probe in einem entsprechend großen Abstand von der Meßöffnung anordnet, weil dann nicht nur die Beleuchtung der Probe so schwach wird, daß die remittierte Strahlung zur Messung nicht mehr ausreicht, sondern weil auch die Winkelverteilung der auf die Meßfläche der Probe auftreffenden Strahlen schon bei kleinen Distanzänderungen so verändert wird, daß die Meßwerte und damit auch die Farbwerte sich stark ändern.

Der vorliegenden Erfindung liegt die Aufgabe zugrunde, mit einem Remissionsmeßgerät trotz relativ kleiner Meßöffnung auch Proben mit relativ großer Oberflächenstruktur noch ausreichend reproduzierbar messen zu können.

Die gestellte Aufgabe wird erfindungsgemäß durch das Meßgerät gemäß des Anspruchs 1 gelöst.

In einer besonders vorteilhaften Ausführungsform besteht die Lichtleiteinrichtung aus einem zylinderförmigen Rohr, das innen verspiegelt ist. Wenn der Innendurchmesser des Rohres z.B. um den Faktor 1,41 größer ist als der Durchmesser der Meßfläche in der Meßöffnung und das Rohr so lang ist, daß an seinem der Meßöffnung abgewandten Ende der vom Empfänger erfaßte Aperturwinkel fast den Innendurchmesser berührt, dann ist die am Ende des Rohres für die Messung erfaßte Probenfläche doppelt so groß wie bei direkt an die Meßöffnung angelegter Probe.

In einer anderen vorteilhaften Ausführungsform besteht die Lichtleiteinrichtung aus einem massivem, lichtdurchlässigen, zylinderförmigen Teil aus Glas oder Kunststoff. In diesem Fall ist der Vergrößerungsfaktor der Meßfläche um den Faktor der Brechzahl des Glases oder Kunststoffes kleiner oder die Länge der Lichtleiteinrichtung muß gegenüber dem Rohr um den Faktor der Brechzahl vergrößert werden. Dies kann sogar vorteilhaft sein, um eine Meßfläche zu erreichen, an die aus räumlichen Gründen ein üblicher Meßkopf nicht angelegt werden kann.

Läßt man quantitative Abweichungen in den aus den Remissionswerten errechneten Farbwerten zu, dann kann die Lichtleiteinrichtung auch kürzer oder länger als in den besprochenen Ausführungsbeispielen sein. Auch nicht zu große Abweichungen von der Zylinderform sind möglich. Außerdem müssen die Meßflächen nicht unbedingt kreisförmige Querschnitte haben.

Weitere vorteilhafte Ausgestaltungen der Erfindung gehen aus den Unteransprüchen und aus den Erläuterungen zu den Figuren hervor.

Die Erfindung wird im folgenden anhand von in den Figuren 1 bis 2 dargestellten Ausführungsbeispielen erläutert. Dabei zeigen:
Fig. 1 den Meßteil eines Remissionsmeßgerätes mit Ulbrichtscher Kugel für eine diffuse Beleuchtung der Probe und einem zylinderförmigen Rohr vor der Meßöffnung und
Fig. 2 den Meßteil eines Remissionsmeßgerätes mit gerichteter Beleuchtung der Probe und einem massiven Lichtleiter vor der Meßöffnung.

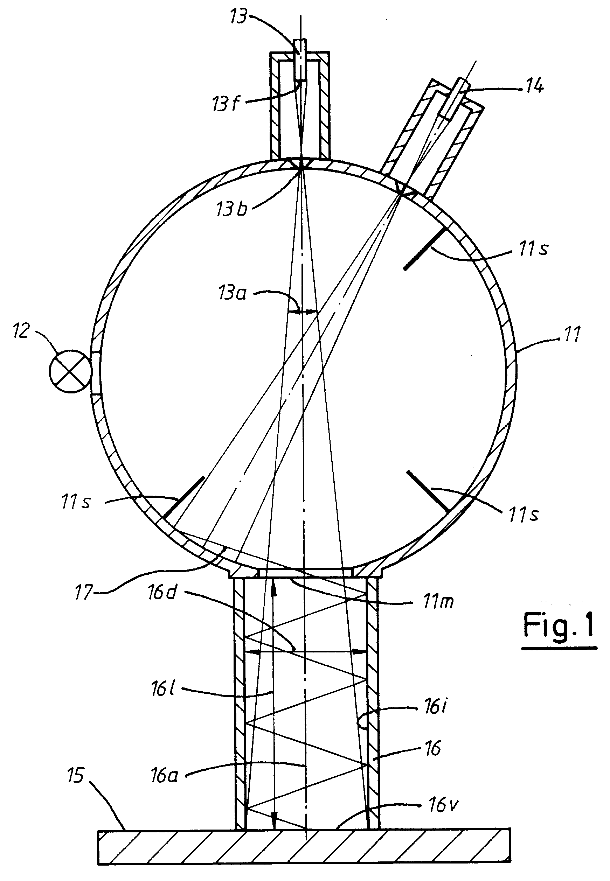

In Figur 1 ist mit (11) eine Ulbrichtsche Kugel bezeichnet, die eine Meßöffnung (11m) hat, an welche üblicherweise die zu messende Probe angelegt wird. Diese wird durch die Lichtquelle (12) in bekannter Weise diffus beleuchtet, wobei durch die Shutter (11s) eine direkte Beleuchtung der Probe und der Empfänger ausgeschlossen ist. Die von der Probe remittierte Strahlung wird von einem Empfänger (13) gemessen, der infolge seiner definierten Empfängerfläche (13f) und einer Blende (13b) nur die Strahlung innerhalb einer vorgegebenen Apertur (13a) erfaßt. Die Empfängerfläche (13f) kann z.B. die Endfläche eines Lichtleiters sein. Häufig ist ein zweiter Empfänger (14) als Referenzempfänger vorgesehen, welcher mit gleicher Apertur die remittierte Strahlung einer geeigneten Stelle des Weißbelages der Ulbrichtschen Kugel erfaßt.

Entsprechend der Erfindung wird die Probe (15), wenn sie eine große Oberflächenstruktur hat, nicht wie üblich an die Meßöffnung (11m) angelegt, sondern an ein zylinderförmiges Rohr (16), das auf seiner Innenfläche (16i) verspiegelt ist und dessen Achse (16a) senkrecht und zentrisch auf die Fläche der Meßöffnung (11m) aufgesetzt ist. Durchmesser (16d) und Länge (16l) des zylinderförmigen Rohres (16) sind zweckmäßiger Weise so gewählt, daß die vom Empfänger vorgegebene Apertur nicht beschnitten wird.

Wie man an Hand eines mit (17) bezeichneten Strahles sieht, wird die Winkelverteilung der auf die Probenoberfläche auftreffenden Strahlung nicht verändert, d.h. wenn die Dimensionierung der Ulbrichtschen Kugel einer Normgeometrie entspricht, wird diese auch bei Verwendung des zylinderförmigen Rohres eingehalten. Andererseits sieht man unmittelbar aus der Figur, daß sich ohne weiteres eine Erhöhung der effektiven Meßfläche auf der Probe auf das Doppelte und mehr erreichen läßt, wenn die Probe nicht wie üblich an die Meßöffnung (11m), sondern an die vergrößerte Meßöffnung (16v) angesetzt wird.

Wenn die Apertur beschnitten wird, wird nicht nur das Empfängersignal verringert, sondern die Randzonen der Meßfläche werden überbewertet. Wenn der Innendurchmesser des zylinderförmigen Rohres zu groß gemacht wird, werden bestimmte Winkelbereiche der Strahlungsverteilung ausgesondert und die Strahlungsleistung wird geschwächt. Derartige Abweichungen von der optimalen Dimensionierung können jedoch je nach der vorliegenden Meßaufgabe häufig bis zu einem gewissen Ausmaß in Kauf genommen werden. Dies gilt besonders bei Farbdifferenzmessungen. Das gleiche gilt für Abweichungen von der Zylinderform für die reflektierende Innenfläche (16i), wobei sowohl eine leicht konusfömige Ausbildung als auch ein vieleckiger Querschnitt möglich sind.

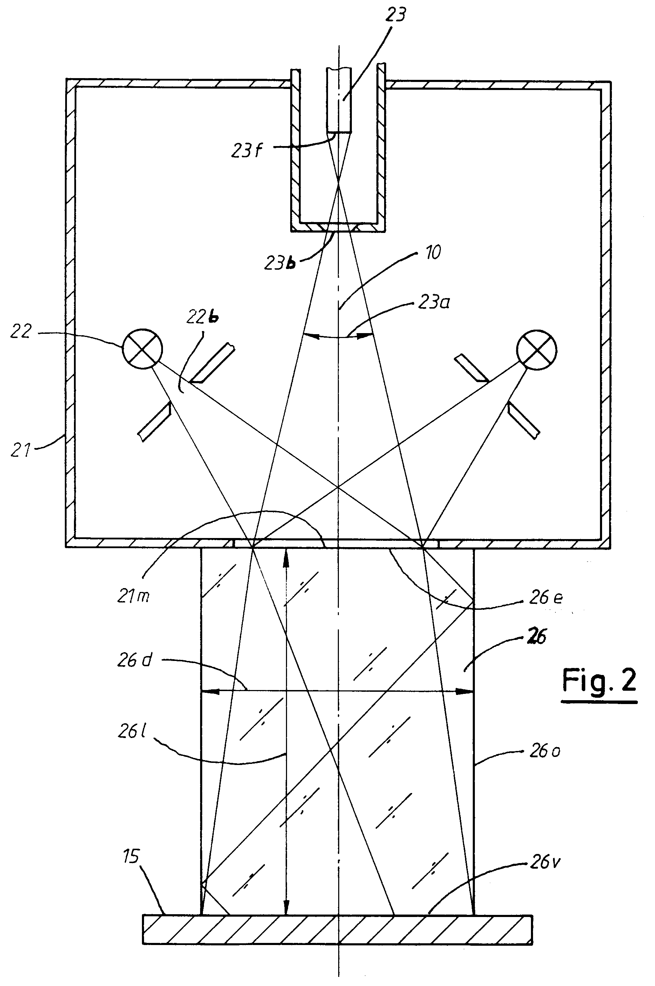

In Figur 2 ist der Meßteil eines Remissionsgerätes mit gerichteter Beleuchtung dargestellt. Dabei ist mit (22) eine Ringleuchte bezeichnet. An ihrer Stelle können auch eine einzelne oder mehrere Lichtquellen verwendet werden, die auf einem Kreis um die Achse (10) angeordnet sind. Die üblicherweise an die Meßöffnung (21m) des Gehäuses (21) angelegte Probe wird unter einem vorgegebenen Winkel, z.B. 45°, und meistens durch eine oder mehrere Blenden (22b) mit vorgegebener Apertur beleuchtet. Die von der Probe remittierte Strahlung wird durch den Empfänger (23) gemessen, der infolge seiner definierbaren Empfängerfläche (23f) und einer Blende (23b) nur die Strahlung innerhalb der vorgegebenen Apertur (23a) erfaßt.

Für den Fall, daß die Probe (15) eine große Oberflächenstruktur hat, ist zwischen ihr und der Meßöffnung (21m) wieder eine Lichtleiteinrichtung (26) angeordnet, für welche in der Figur 2 ein anderes Ausführungsbeispiel dargestellt ist, nämlich ein massives, zylinderförmiges Rohr aus Glas oder Kunststoff, dessen Außenfläche (26o) zweckmäßigerweise verspiegelt ist und dessen Endflächen (26e, 26v) vorteilhafterweise entspiegelt sind. Durchmesser (26d) und Länge (26l) der Lichtleiteinrichtung (26) sind wieder so gewählt, daß die Apertur (23a) des Empfängers (23) gerade nicht beschnitten wird und die gewünschte Vergrößerung der effektiven Meßfläche auf der Probe (15) erreicht wird. Auch in diesem Fall sind Abweichungen von der optimalen Dimensionierung der Lichtleiteinrichtung (26), sowie Abweichungen von der Zylinderform in einem Umfang möglich, der von den zu untersuchenden Proben und der notwendigen Meßgenauigkeit abhängt.

Die Probe (15) muß nicht unmittelbar auf die vergrößerte Meßöffnung (26v) der Lichtleitvorrichtung (26) aufgesetzt werden, sondern kann auch in einem definierten Abstand von ihr angeordnet sein.

Selbstverständlich kann auch für das in Figur 2 dargestellte Remissionsmeßgerät das Rohr (16) von Figur 1 und für das in Figur 1 dargestellte Gerät der massive Zylinder (26) von Figur 2 verwendet werden.

## Patentansprüche

1. Remissionsmeßgerät mit einer Meßöffnung (11m) mit einer Lichtquelle (12) zum Beleuchten der Probe (15) und einem Empfänger (13), welcher die von der Probe (15) durch die Meßöffnung (11m) remittierte Strahlung innerhalb seiner vorgegebenen Apertur (13a) erfaßt, dadurch gekennzeichnet, daß außen an die Meßöffnung (11m) eine vorzugsweise abnehmbare mindestens annähernd zylinderförmige Lichtleiteinrichtung (16) angesetzt ist, deren Achse (16a) senkrecht und zentrisch auf der Fläche der Meßöffnung (11m) steht, deren Durchmesser (16d) und Länge (16l) so gewählt sind, daß die Apertur (13a) des Empfängers (13) nicht wesentlich beschnitten wird und deren der Meßöffnung (11m) gegenüberliegendes Ende als probenseitige Meßöffnung (16v) für die Probe (15) vorgesehen ist.

2. Remissionsmeßgerät nach Anspruch 1, dadurch gekennzeichnet, daß die Meßöffnung (11m) Teil eines Meßkopfes (11) ist, der mit dem übrigen Gerät durch ein Kabel verbunden ist.

3. Remissionsmeßgerät nach Anspruch 1 oder 2, dadurch gekennzeichnet, daß die Meßöffnung (11m) Teil einer Ulbrichtschen Kugel (11) ist.

4. Remissionsmeßgerät nach einem der Ansprüche 1 bis 3, dadurch gekennzeichnet, daß die Lichtleiteinrichtung (16) einen kreisförmigen Querschnitt hat.

5. Remissionsmeßgerät nach Anspruch 1 bis 3, dadurch gekennzeichnet, daß die Lichtleiteinrichtung (16) einen vieleckigen Querschnitt hat.

6. Remissionsmeßgerät nach Anspruch 4 oder 5, dadurch gekennzeichnet, daß die Lichtleiteinrichtung (16) ein Rohr ist.

7. Remissionsmeßgerät nach Anspruch 4 oder 5, dadurch gekennzeichnet, daß die Lichtleiteinrichtung (26) ein massives, lichtdurchlässiges Teil aus Glas oder Kunststoff ist.

8. Remissionsmeßgerät nach Anspruch 6, dadurch gekennzeichnet, daß das der Probe (15) zugewandte Ende des Rohres (16) mit einem Fenster verschlossen ist.

9. Remissionsmeßgerät nach Anspruch 7 oder 8, dadurch gekennzeichnet, daß die Endflächen (26e, 26v) der Lichtleiteinrichtung entspiegelt sind.

10. Remissionsmeßgerät nach einem der Ansprüche 1 bis 9, dadurch gekennzeichnet, daß die reflektierenden Flächen (16i) der Lichtleiteinrichtung (16) verspiegelt oder mit einem Weißbelag belegt sind.

## Claims

1. A Reflectance measuring apparatus with a measuring aperture (11m), with a light source (12) for illuminating the specimen (15) and a receiver (13), which detects the radiation reflected from the specimen (15) through the measuring aperture (11m) within its predetermined aperture (13a),
characterized in that
a preferably detachable at least approximately cylinder-shaped light-conducting device (16) is attached to the outward side of the measuring aperture (11m), its axis (16a) being orthogonal to and centered on the area of the measuring aperture (11m), its diameter (16d) and length (16l) being selected so as to not significantly vignette the aperture (13a) of the receiver (13), and its end opposite the measuring aperture (11m) being provided as the specimen-side measuring aperture (16v) for the specimen.

2. Reflectance measuring apparatus according to claim 1, characterized in that the measuring aperture (11m) is part of a measuring head (11) which is connected with the other components of the apparatus by a cable.

3. Reflectance measuring apparatus according to claims 1 or 2, characterized in that the measuring aperture (11m) is part of an Ulbricht sphere (11).

4. Reflectance measuring apparatus according to one of the claims 1 to 3, characterized in that the light-conducting device (16) has a circular-shaped cross section.

5. Reflectance measuring apparatus according to one of the claims 1 to 3, characterized in that the light-conducting device (16) has a polygonal-shaped cross section.

6. Reflectance measuring apparatus according to claim 4 or 5, characterized in that the light-conducting device (16) is a tube.

7. Reflectance measuring apparatus according to claim 4 or 5, characterized in that the light-conducting device (16) is a massive transparent glass or plastic part.

8. Reflectance measuring apparatus according to claim 6, characterized in that the end of the tube (16) facing the specimen (15) is closed by a window.

9. Reflectance measuring apparatus according to claim 7 or 8, characterized in that the end faces (26e, 26v) of the light-conducting device (16) bear anti-reflection coatings.

10. Reflectance measuring apparatus according to one of the claims 1 to 9, characterized in that the reflecting areas (16i) of the light-conducting device (16) have a reflective or a white coating formed thereon.

## Revendications

1. Appareil de mesure de réflexion comportant une ouverture de mesure (11m) possédant une source de lumière (12) pour éclairer l'échantillon (15) et un récepteur (13), qui détecte, à l'intérieur de son ouverture prédéterminée (13a), le rayonnement réfléchi par l'échantillon (15) à travers l'ouverture de mesure (11m), caractérisé en ce qu'extérieurement est installé, sur l'ouverture de mesure (11m), un dispositif de guidage de la lumière (16), de préférence amovible et de forme au moins approximativement cylindrique et dont l'axe (16a) est perpendiculaire à et centré sur la face de l'ouverture de mesure (11m) et dont le diamètre (16d) et la longueur (16l) sont choisis de telle sorte que l'ouverture (13a) du récepteur (13) n'est pas sensiblement réduite et dont l'extrémité, située en vis-à-vis de l'ouverture de mesure est prévue en tant qu'ouverture de mesure (16v) située du côté de l'échantillon (15) et prévue pour ce dernier.

2. Appareil de mesure de réflexion selon la revendication 1, caractérisé en ce que l'ouverture de mesure (11m) fait partie d'une tête de mesure (11), qui est reliée par un câble au reste de l'appareil.

3. Appareil de mesure de réflexion selon la revendication 1 ou 2, caractérisé en ce que l'ouverture de mesure (11m) fait partie d'une sphère d'Ulbricht (11).

4. Appareil de mesure de réflexion selon l'une des revendications 1 à 3, caractérisé en ce que le dispositif de guidage de la lumière (16) possède une section transversale circulaire.

5. Appareil de mesure de réflexion selon les revendications 1 à 3, caractérisé en ce que le dispositif de guidage de la lumière (16) possède une section transversale polygonale.

6. Appareil de mesure de réflexion selon la revendication 4 ou 5, caractérisé en ce que le dispositif de guidage de la lumière (16) est un tube.

7. Appareil de mesure de réflexion selon la revendication 4 ou 5, caractérisé en ce que le dispositif de guidage de la lumière (26) est un élément massif transparent à la lumière et formé d'un verre ou d'une matière plastique.

8. Appareil de mesure de réflexion selon la revendication 6, caractérisé en ce que l'extrémité tournée vers l'échantillon (15) du tube (16) est fermée par une fenêtre.

9. Appareil de mesure de réflexion selon la revendication 7 ou 8, caractérisé en ce que les surfaces d'extrémité (26e, 26v) du dispositif de guidage de la lumière sont traitées selon un traitement antireflet.

10. Appareil de mesure de réflexion selon la revendication 1 à 9, caractérisé en ce que les surfaces réfléchissantes (16i) du dispositif de guidage de la lumière (16) sont métallisées ou recouvertes d'un revêtement blanc.
